# EUROPEAN PATENT SPECIFICATION

(11) **EP 3 348 225 B1**
(45) Date of publication and mention of the grant of the patent: **18.09.2019**
(21) Application number: 18151531.3
(22) Date of filing: 12.01.2018
(51) Int. Cl.: A61C 7/10

(54) **ORTHODONTIC APPARATUS**
KIEFERORTHOPÄDISCHE APPARATUR
APPAREIL ORTHODONTIQUE

(30) Priority: 13.01.2017 PL 42020917
(43) Date of publication of application: 18.07.2018
(73) Proprietor: Janocha, Krzysztof, 01-014 Lomianki (PL)
(72) Inventor: Janocha, Krzysztof, 01-014 Lomianki (PL)
(74) Representative: Kaminski, Piotr

(56) References cited:
- GB-A- 2 505 164
- KR-Y1- 200 465 679
- US-A1- 2004 110 108
- US-A1- 2016 331 950
- US-B1- 6 435 871

## Description

The object of the invention is an orthodontic appliance for correcting the setting of one or more of the anterior teeth in the patient's jaw or mandible.

There is a high demand for devices and methods allowing for an effective and fastest possible orthodontic correction of the teeth setting in the patient's jaw or mandible. Such a correction is important not only for aesthetic reasons. Improper setting of the patient's teeth can lead to health problems. There is a difficulty in maintaining good hygiene in crowded, hard-to-reach places, which increases the risk of developing a carious defects. In addition, friction forces in crowded places (contact surfaces) damage the enamel, which increases the risk of caries development. Asymmetric distribution of forces in occlusion causes uneven wear of the incisal edges of the opposite teeth, which causes damage to the tooth crown, as well as leads to the creation of trauma points which cause gum diseases. Asymmetric distribution of forces in occlusion may cause further movement of the teeth that have premature occlusal contact. In extreme cases, it may lead to root resorption and loss of a weaker tooth.

Improper setting of incisors may cause difficulties in surgical and prosthetic reconstruction.

In the prior art, known are appliances which are based on providing the exertion of forces on the teeth through the use of labial and palatine arches attached to the patient's teeth the position of which is to be corrected. The use of permanent appliances may, however, cause damage to the enamel as a result of fixing of the locks. Keeping good oral hygiene is hindered by less convenient access when brushing and flossing the teeth. This may increase the risk of developing carious defects. The locks, which are permanently stuck, may hinder proper access during cavity treatment. The permanent appliances are worn for a long period of time. A long exposure of orthodontic locks and wires may increase the risk of inflammation of oral mucosa. Patients who actively practice sports may be exposed to mucous membrane injuries and breaking of tissue continuity during impacts.

Another solution is proposed in the patent document US 6,435,871 B1. The document discloses an orthodontic appliance having a base which attaches the appliance onto the patient's teeth, wherein said base includes two acrylic elements facing each other and connected by a connecting arch. The task of acrylic elements is to attach the device onto the patient's premolar teeth, wherein this task is accomplished by placing Adams clasps in said elements. The Adams clasps, once placed in the gaps between the patient's premolar teeth, stabilise the appliance on the patient's jaw or mandible. The acrylic elements constitute also a base to which two arches are attached - palatal arch and labial arch, wherein each of the arches is equipped with a support which, when the appliance is placed, rests on teeth which require their position to be corrected. Each of these supports is equipped with a pair of distal parts by means of which the arches are attached in the acrylic elements of the base. By providing elastic elements placed on said distal parts, the palatal arch, once the appliance is placed on the patient's mandible or jaw, exerts a pushing force against the posterior surface of the teeth the position of which requires correction. At the same time, elastic elements attached to the distal parts of the labial arch exert a force against the anterior surface of the teeth, thus the teeth are affected by a force directed in the opposite direction to the pressure exerted by the palatal arch against the posterior surface of the teeth. According to US 6,435,871 B1, the so constructed orthodontic appliance ensures effective correction of the teeth setting. However, such solutions of state of the art not without drawbacks. Two parallel wires of the Adams clasps can cause some undesirable effects. Their pressing into the interdental spaces results in reduction of the created interdental spaces of the teeth the setting of which is to be corrected, and provision of such spaces is necessary to correct the setting of the teeth on which the supports act. This causes reduction in the effectiveness of the appliance. In addition, the use of the Adams clasps causes unintentional movements of the premolar teeth, which movements, due to the structure of these teeth (number of roots and size), are very painful for the patient. Discomfort associated with the impact of the Adams clasps is a frequent cause of shortening the daily wear time of the appliance, and thus reduces the effectiveness of its operation. In extreme cases, patients give up treatment. Wires of the clasps may additionally cause premature occlusal contacts which can damage enamel of the opposite teeth, as well as enamel of the teeth which they embrace.

At the same time, attaching the appliance using Adams clasps causes that the sum of forces used to attach the device onto the teeth is concentrated on a relatively small area of the mucous membrane, causing pressure and the possibility of pain and pressure ulcers. This results in shortening the daily wear time of the appliance, and thus in reducing the effectiveness of the appliance's operation.

Shortening the daily wear time of the appliance is also influenced by the discomfort caused by springs of the labial arch which can irritate the mucous membranes of the cheeks and cause inflammation, so that the patient feels pain/discomfort. It also happens that patients who want to avoid pain cover the wire and the spring of the labial arch with wax which relieves pain but, in consequence, reduces mobility of this segment because the wax penetrates between the moving surfaces and thus reduces the forces acting on the labial arch.

Also the structure of the appliance reduces its effectiveness. The number of wires needed to mount the appliance, which must be embedded in the acrylic elements, limits the freedom of choosing location of the tube for attaching the distal parts of the labial and palatal arches, while mounting thereof should be carried out parallel to the plane of occlusion. Structure of the appliance according to US 6,435,871 B1 enforces reduction of the force of impact of the labial and palatal arches.

The labial arch in state of the art is made of acrylic material with a relatively small cross-section (in the appliances available on the market, this cross-section is about 3x2 mm). Thus, the area of its adherence to crowns of the teeth undergoing correction of their setting constitutes about 30% of the crown surface. Such a small area of impact reduces effectiveness of the appliance's operation by spontaneous movement of the arch along the tooth crown, up or down depending on the situation, which changes the place where the force is applied, and thus changes the geometry of forces exerted on the tooth crown and causes its movement different from the predefined one. In addition, reproduction of the shape of the tooth crown as well as its position relative to the adjacent teeth on the acrylic arch is limited (up to 30%), which in the final phase of treatment results in the lack of the possibility of precise final setting of the teeth (so called finishing) in the originally predefined position.

Then, additional procedures are often required. Structure of the appliance according to state of the art makes impossible the correction of the teeth setting in the lateral section.

The object of the invention is to provide a solution which will reduce the disadvantages of the solutions known in the prior art. This object is achieved through solutions defined by the the independent claims contained herein. The dependent claims define preferred embodiments of the solutions according to the invention.

The object of the invention is an appliance for orthodontic correction of setting of one or more anterior teeth in the patient's jaw or mandible, wherein the appliance comprises a pushing arch having a pressing block and two arms equipped with pushing means; a labial arch having a correcting plate and two arms equipped with tensioning means; a base consisting of two opposite mounting elements connected by a connector and provided for attaching the appliance onto the teeth on both sides of the patient's jaw or mandible, wherein arms of the pushing arch and arms of the labial arch are mounted in the mounting elements of the base, wherein the appliance according to the invention is characterised in that the correcting plate reproduces the shape of the anterior part of the patient's anterior teeth located in relation to each other in the target positions envisaged by orthodontic correction, the correcting plate is so arranged that when placed onto the patient's jaw or mandible, the correcting plate covers essentially the entire surface of the crowns of the anterior part of the anterior teeth, each of the mounting elements are in the form of a plate reproducing the shape of at least two consecutive premolar teeth of the patient, preferably two premolar teeth and a following molar tooth, most preferably two premolar teeth and two following molar teeth, and wherein the mounting elements are so arranged that when placed onto the patient's jaw or mandible, the mounting elements cover the upper and lateral surfaces of the patient's tooth crowns.

Preferably, to each of the mounting elements, a sleeve is attached in which an arm of the labial arch is mounted, wherein the arm is terminated by a locking element, and between the tube and the locking element tensioning means are provided on the arms.

In a preferred embodiment of the invention, the tensioning means is an orthodontic spring.

Preferably, the arms of the pushing arch are mounted in the sleeves formed in the mounting elements, and pushing means are provided between the sleeve and the pressing block on the arms, preferably the pushing means is an orthodontic spring.

In a preferred embodiment, the pressing block reproduces the shape of the posterior part of the patient's anterior teeth located in the target positions as envisaged by the treatment plan.

Preferably, the correcting plate and/or the mounting elements and/or the connector and/or the pressing block are constituted by a thermoformable plate made of thermoplastic material.

In a preferred embodiment, the correcting plate and/or the mounting elements and/or the connector and/or the pressing block are arranged as 3D prints.

Also preferably, the base connector comprises a reinforcing arch. In another preferred embodiment, the connector is arranged as an adjustable connector, which ensures adjustment of the distance between the mounting elements.

In a preferred embodiment, the tensioning means are placed in the protective sleeve provided on the surface of the mounting element.

Preferably, the correcting plate and/or the mounting elements and/or the connector and/or the pressing block and/or the protective sleeve, even more preferably all of said elements, are made of a transparent material.

The object of the invention is also an appliance for orthodontic correction of setting of one or more anterior teeth of the patient's jaw or mandible, comprising a labial arch having a correcting plate and two arms equipped with tensioning means and a base consisting of two opposite mounting elements connected by a connector and provided for attaching the appliance on the teeth on both sides of the patient's jaw or mandible, wherein arms of the labial arch are mounted in the mounting elements of the base, the appliance according to the invention is characterised in that each of the mounting elements is in the form of a plate reproducing the shape of at least two consecutive premolar teeth of the patient, preferably two premolar teeth and a following molar tooth, most preferably two premolar teeth and two following molar teeth, wherein the mounting elements are so arranged that, when placed onto the patient's jaw or mandible, the mounting elements cover the upper and lateral surfaces of the patient's tooth crowns.

Preferably, the correcting plate reproduces the shape of the anterior part of the patient's anterior teeth located in relation to each other in the target positions envisaged by orthodontic correction; wherein the correcting plate is envisaged so that, once placed onto the patient's jaw or mandible, the correcting plate covers essentially the entire surface of the crowns of the anterior part of the anterior teeth.

In a preferred embodiment, to each of the mounting elements, a sleeve is attached in which an arm of the labial arch is mounted, said arm is terminated by a locking element, on the arms and tensioning means are provided between the sleeve and the locking element, preferably the tensioning means is an orthodontic spring.

In a preferred embodiment, the appliance additionally comprises a pushing arch having a pressing block and two arms equipped with pushing means, wherein preferably the arms of the pushing arch are mounted in sleeves formed in the mounting elements, and on the arms the pushing means are provided between the sleeve and the pressing block. Preferably, the pushing means is an orthodontic spring. Also preferably, the pressing block reproduces the shape of the posterior part of the patient's anterior teeth located in the target positions envisaged by the treatment plan.

In another preferred embodiment, the correcting plate and/or the mounting elements and/or the connector and/or the pressing block are constituted by a thermoformable plate made of thermoplastic material.

Also preferably, the correcting plate and/or the mounting elements and/or the connector and/or the pressing block are arranged as 3D prints.

In a preferred embodiment, the base connector comprises a reinforcing arch.

In another preferred embodiment, an adjustable connector is envisaged which ensures adjustment of the distance between the mounting elements.

Preferably, the tensioning means are placed in the protective sleeve provided on the surface of the mounting element.

In another preferred embodiment, the correcting plate and/or the mounting elements and/or the connector and/or the pressing block and/or the protective sleeve, and preferably all of said elements, are made of a transparent material.

The object of the invention is also an appliance for orthodontic correction of setting of one or more anterior teeth of the patient's jaw or mandible, comprising a labial arch having a correcting plate and two arms equipped with tensioning means; and a base consisting of two opposite mounting elements connected by a connector, the mounting elements are equipped with means providing for attachment of the appliance on the teeth on both sides of the patient's jaw or mandible, and arms of the labial arch are mounted in the mounting elements of the base; wherein the appliance according to the invention is characterised in that the said correcting plate reproduces the shape of the anterior part of the patient's anterior teeth located in relation to each other in the target positions envisaged by orthodontic correction; wherein the correcting plate is so arranged that, once placed onto the patient's jaw or mandible, the correcting plate covers essentially the entire surface of the crowns of the anterior part of the anterior teeth.

Preferably, to each of the mounting elements, a sleeve is attached in which an arm of the labial arch is mounted, wherein the arm is terminated by a locking element, and on the arms tensioning means are provided between the tube and the locking element. Preferably, the tensioning means is an orthodontic spring.

In a preferred embodiment, the appliance additionally comprises a pushing arch having a pressing block and two arms equipped with pushing means, wherein in a preferred embodiment, the arms of the pushing arch are mounted in sleeves formed in the mounting elements, on the arms the pushing means are provided between the sleeve and the pressing block. Preferably, the pushing means is an orthodontic spring. In a preferred embodiment of the solution according to the invention, the pressing block reproduces the shape of the posterior part of the patient's anterior teeth located in the target positions envisaged by the treatment plan.

In a preferred embodiment of the solution each of the mounting elements is in the form of a plate reproducing the shape of at least two consecutive premolar teeth of the patient, preferably two premolar teeth and a following molar tooth, most preferably two premolar teeth and two following molar teeth, wherein the mounting elements are so arranged that, once placed onto the patient's jaw or mandible, the mounting elements cover the upper and lateral surfaces of the patient's tooth crowns.

Preferably, the correcting plate and/or the mounting elements and/or the connector and/or the pressing block are constituted by a thermoformable plate made of thermoplastic material.

In another preferred embodiment of the solution, the correcting plate and/or the mounting elements and/or the connector (4) and/or the pressing block are arranged as 3D prints.

In a preferred embodiment, the base connector comprises a reinforcing arch. In another preferred embodiment of the invention, the connector is envisaged as an adjustable connector which ensures adjustment of the distance between the mounting elements.

Preferably, the tensioning means are placed in the protective sleeve provided on the surface of the attaching element.

In another preferred embodiment of the invention, the correcting plate and/or the mounting elements and/or the connector and/or the pressing block and/or the protective sleeve, and preferably all of said elements, are made of a transparent material.

In the meaning of present invention, the reproduction of shape of the anterior part of the patient's anterior teeth located in relation to each other in the target positions envisaged by orthodontic correction should be understood as such a shape of the plate that is a reproduction of the proper setting of the teeth in the target position. The reproduction of shape of the posterior part of the patient's anterior teeth should be analogously understood. To achieve said reproduction, the teeth model of the patient's jaws or mandible with improperly set teeth is scanned using an orthodontic scanner, e.g. 3 Shape R500 scanner. Such a scan enables precise orthodontic analysis using specialised computer programs known in the art (e.g. Ortho Analyzer software from 3 Shape). After the analysis, individual teeth are set with the aid of a computer to a perfect arc. It is analysed whether all anatomical parameters and parameters of the stomatognathic system functions are properly developed. The record of the correct teeth setting is exported from the orthodontic scanner software to the 3D printer in order to print the model with the target setting of the patient's teeth. On the so prepared print, a thermoformed plate of thermoplastic material (e.g. Duran from Scheu Dental) is embossed in a known manner, wherein the plate precisely reproduces the shape of crowns in their target setting. Model that reproduces the target setting of the teeth in the patient's mandible or jaw can also be obtained directly by means of the 3D printing technique. The 3D print obtained on the basis of data contained in the orthodontic software constitutes, like the thermoformed plate, the base for preparing the appliance according to the invention.

From the obtained model in the form of a thermoformed plate or a 3D print, a correcting plate of the labial arch is cut out, which, by providing the reproduction of shape of the anterior part of the patient's anterior teeth located in relation to each other in the target positions, provides a negative form into which improperly set teeth will be directed when wearing the appliance.

From the obtained model in the form of a thermoformed plate or a 3D print, a pressing block can be obtained which can provide reproduction of shape of the posterior part of the patient's anterior teeth located in relation to each other in the envisaged target positions.

Similarly, from a thermoformed plate obtained in the manner described above or from a 3D printout, mounting elements are cut out which also reproduce the shape of the patient's premolar teeth and molar teeth.

Reproduction of shape of the patient's premolar teeth and molar teeth in the mounting elements should be understood as such a shape a thermoformed plate or a 3D printout, which ensures, that once the appliance is placed on the patient's jaw or mandible, the mounting elements precisely cover the upper and lateral surfaces of the patient's tooth crowns, preferably partially covering also the mucous membrane. The forces of adhesion, friction and elasticity of the material from which the plate is made (e.g. Duran from Scheu Dental) ensure proper retention of the appliance.

The adjustable connector should be understood as a device such as the Fisher screw known in the art. The Fisher screw can be embedded into a thermoformed plate. Unscrewing the Fisher screw allows the jaw or mandible arch to expand in the anterior region in cases where discharging of existing crowding is not possible through a standard procedure, i.e. stripping (grinding of tangential surfaces of crowded teeth), because the stripping values necessary to discharge the existing crowding exceed the physiologically acceptable stripping limits. Methods for providing expansion of the jaw or mandible arch in the anterior region are well known to one skilled in the art. Solutions of this type can be found, for example, in Schwarz appliances with a Fisher screw installed.

Materials used in orthodontic technology, known to one skilled in the field, are used to build the appliance.

The appliance according to the invention solves the problems encountered when using other appliances of the prior art.

The correcting plate of the appliance according to the invention covers the entire labial surfaces of the crowns (the anterior part of the teeth), and therefore the forces exerted by the appliance on the teeth interact to a greater extent and are more precisely directed. This increases the effectiveness of the appliance. Complete coverage of labial surfaces of crowns causes the appliance to become less visible, more aesthetic, especially when a transparent material is used to produce the appliance. The patient is more willing to wear such a device, which increases the time of using the appliance within a day, and thus increases the effectiveness of the treatment.

A smaller thickness of the correcting plate of the labial arch compared to the arches known in the art which comprise supports made of acrylic makes the worn appliance pushing the labium less, which on top of the aesthetic benefit, reduces at the same time the risk of abrasion of the labial mucosa. Both advantages increase the willingness to wear the appliance and thus its effectiveness.

The correcting plate in the appliance according to the invention also enables the extrusion of various types of shapes and thicknesses of pressings, using for this purpose tools generally available and known to one skilled in the field (e.g. CA-TIP 1, CA-TIP 2 tools from Scheu-Dental). This eliminates the need to adhere composite locks to the labial surface of tooth crowns, wherein such locks, in particularly complicated cases, allow proper orientation of the force acting on the tooth. Etching of the enamel with orthophosphoric acid precedes adhesion of such locks. This causes damage to the healthy tissue of the tooth. The possibility of avoiding this method is therefore very desirable.

The mounting elements in the appliance according to the invention allow elimination of the need to use Adams clasps, which helps to avoid all of the above said undesirable effects associated with their use. Undesirable movements of the premolar and molar teeth are eliminated, and thus the pain that discourages the use of the appliance is avoided. The lack of insertion of the clasp wires allows taking full advantage of the spaces created by enamel reduction in order to discharge the teeth crowding. The lack of clasp wires on the chewing surfaces eliminates premature contacts and thus reduces the risk of damage to enamel of opposite teeth.

The mounting elements in the appliance according to the invention also provide a larger area of adhesion to the tooth crowns and to a part of soft tissues, thus reducing the risk of anemisation of mucous membrane and formation of pressure ulcers. Reducing the number of orthodontic wires in the appliance increases the available area for mounting the sleeve for attaching the pushing arch. This ensures that the wire of the pushing arch is led out of the sleeve at a smaller angle of attack. Exerting the pushing force in a plane parallel to the occlusion plane increases accuracy of selection of its value and thus reduces the risk of complications in the treatment process. The greater availability of the area for mounting the sleeve also allows increasing the range of impact on the crowns of the teeth (above or below), the setting of which is subject to correction. This allows directing the force needed to put the teeth in their target position more precisely.

The mounting elements embrace premolar and molar teeth from the cheek side. This makes it possible to provide a protective sleeve on the mounting elements which allows covering the tensioning elements of the labial arch. These elements are movable, and in addition, due to their uneven surface, often cause irritation of the mucosa and thus shorten the time of use of the appliance by the patient within a day. This limits the effectiveness of treatment. The protective sleeve effectively insulates moving elements, thus reduces significantly the risk of damage to the cheek mucous membrane while providing a full range of movement of the tensioning elements.

The mounting elements accurately reproduce the grooves and bumps of premolar and molar teeth, thanks to which a better contact in occlusion is obtained. This is a very advantageous aspect in cases where it is necessary to raise the occlusion if there is a risk of damage to the palatal arch when biting deep. Applying bite blocks onto a base plate made of thermoformed material is very precise. It also increases the comfort of wearing the appliance when biting, while ensuring high precision for adjusting the raise of occlusion.

Applying a light-cured material on tooth crowns on a 3D model before embossing the base plate of thermoformed material allows creation of additional space between the surface of crowns of the lateral teeth (once the appliance is mounted on the patient's teeth) and the plate of the mounting elements. And vice versa, creation of a defect in the surface of the crown in the 3D model will cause bulging of the mounting elements. In this way, on one side, the tooth is pushed by the plate of the mounting elements, and on the other side, it has free space in the direction to which it can move. Thus, thanks to the use of the mounting elements made of a thermoformed material, it is possible to correct improper setting of the teeth in lateral sections.

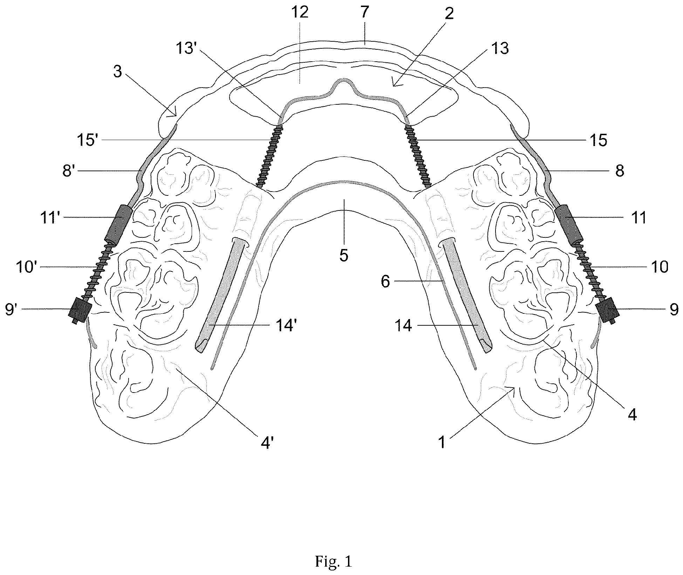

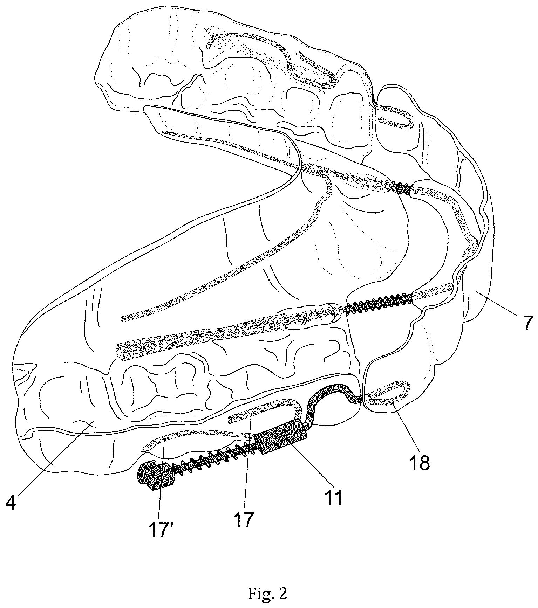

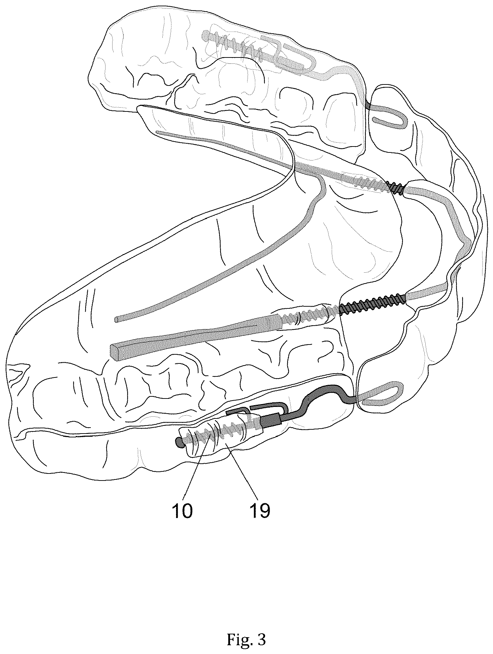

The appliance according to the invention is shown in an embodiment based on the drawing in which Fig. 1 shows an embodiment of the appliance in a perspective view from above, Fig. 2 shows the appliance according to Fig. 1 in a bottom view, Fig. 3 shows the apparatus according to Fig. 1 in a bottom view in an embodiment provided with a protective sleeve.

The appliance according to the invention in the embodiment shown in Fig. 1 consists of a base 1, a pushing arch 2 and a labial arch 3. The base 1 includes two mounting elements 4, 4' connected by a connecting arch 5. As shown in the drawing, the mounting elements have grooves and bumps which, once placed on the patient's teeth, ensure fitting of the mounting elements with the teeth and make the appliance attached. The connecting arch 5 in the embodiment shown in Fig. 1 is additionally reinforced with a reinforcing arch 6. In another preferred embodiment of the appliance according to the invention (not shown in the drawing), the connecting arch is not reinforced with the reinforcing arch, but it is equipped with an adjustable connector in the form of a Fisher screw which ensures adjustment of the distance between the mounting elements.

The labial arch 3 has a correcting plate 7 which reproduces the shape of the patient's teeth (as better shown in Fig. 2 and Fig. 3). On both ends of the correcting plate, arch arms 8, 8' are attached. At the ends of the arms 8, 8', locking elements 9, 9' and tensioning elements 10, 10' are attached. The arms 8, 8' are mounted in sleeves 11, 11', respectively, attached to the mounting elements 4, 4', respectively. In the embodiment of the appliance according to the invention, shown in the drawing, the role of tensioning means is fulfilled by orthodontic springs which, when placed between the sleeve 11, 11' and a locking element 9,9', when the appliance is worn by the patient, cause a constant force attracting the correcting plate 7 towards the mounting elements.

The pushing arch 2, shown in Fig. 1, consists of a pressing block 12 in which arms 13, 13' are attached. The arms 13, 13' are mounted in sleeves 14, 14', and pushing means 15, 15' are placed between the sleeves 14, 14' and the pressing block 12 on the arms 13, 13'. In the embodiment of the appliance according to the invention, shown in the drawing, the role of pushing means is fulfilled by orthodontic springs which, when placed between the sleeves 14, 14' and the pressing block, when the appliance is worn by the patient, cause a constant force pushing the pressing block 12 towards the correcting plate 7.

In the Fig. 2, the appliance from Fig. 1 is shown in a bottom view, wherein in Fig. 2, an embodiment of the way for attaching the labial arch in the appliance is also shown. In the embodiment shown, the sleeve 11 has two anchors 17, 17' which are mounted on a side wall of the mounting element 4 in a known manner by means of dental polymerising materials (e.g. using Biocryl Resin formulation on the Vertex Multicure machine). An end 18 of the arch arm is attached to the correcting plate 7 in an analogous manner.

In Fig. 3, an embodiment of the appliance is shown in which, on a side wall of the mounting element, a protective sleeve 19 is provided which covers the tensioning means 10, which helps to avoid mucosa irritations when the appliance is worn by the patient. The protective sleeve is formed by means of dental polymerising materials before attaching the labial arch onto side walls of the mounting elements.

The embodiment of the appliance according to the invention, shown in the drawing, includes a labial arch equipped with a correcting plate which reproduces the shape of the anterior part of the patient's anterior teeth located in relation to each other in target positions envisaged by orthodontic correction, known in the art a pushing arch a pressure block of which preferably reproduces the shape of the posterior part of the patient's anterior teeth located in target positions envisaged by the treatment plan and mounting elements which in the most preferred embodiment of a plate reproduc the shape of two premolar teeth, preferably two premolar teeth and successive molar tooth, most preferably two premolar teeth and two successive molar teeth. The so constructed appliance provides the most beneficial effects of correcting the setting of the teeth position.

It is, however, clear to one skilled in the art that advantageous effects will also be provided by the use, in the prior art appliances, of a labial arch equipped with a correcting plate which reproduces the shape of the anterior part of the patient's anterior teeth located in relation to each other in target positions envisaged by orthodontic correction. Similarly, it will be obvious to one skilled in the art that advantageous effects will also be provided by the use, in the prior art appliances, of mounting elements in the form of a plate which reproduces the shape of at least two consecutive premolar teeth of the patient, preferably two premolar teeth and a following molar tooth, most preferably two premolar teeth and two following molar teeth.

Although the most optimal conditions for correction of the patient's anterior teeth are provided by an appliance in which both a pushing arch and a labial arch are used, in some clinical cases where it is not necessary to exert a pressing force, a variant of the solution is also acceptable in which the use of a pressing arch is optional.

Such solutions are the object of the invention and are covered by the scope of protection resulting from the following patent claims.

## Claims

1. An appliance for orthodontic correction of setting of one or more anterior teeth in the patient's jaw or mandible, the appliance comprising:
a labial arch (3) having a correcting plate (7) and two arms (8, 8') equipped with tensioning means (10,10'); and
a base (1) consisting of two opposite mounting elements (4, 4') linked by a connector (5) and provided for attaching the appliance onto the teeth on both sides of the patient's jaw or mandible, wherein the arms (8, 8') of the labial arch (3) are mounted in the mounting elements (4, 4') of the base (1),
**characterised in that** each of the mounting elements (4, 4') is in the form of a plate reproducing the shape of at least two consecutive premolar teeth of the patient, preferably two premolar teeth and a following molar tooth, most preferably two premolar teeth and two following molar teeth, and wherein the mounting elements (4,4') are so arranged that when placed onto the patient's jaw or mandible, the mounting elements (4, 4') cover the upper and lateral surfaces of the patient's tooth crowns.

2. The appliance according to claim 1, wherein the correcting plate (7) reproduces the shape of the anterior part of the patient's anterior teeth located in relation to each other in the target positions envisaged by orthodontic correction; the correcting plate is so arranged that when placed onto the patient's jaw or mandible, the correcting plate covers essentially the entire surface of the crowns of the anterior part of the anterior teeth.

3. The appliance according to claims 1 or 2, wherein to each of the mounting elements (4,4'), a sleeve (11, 11') respectively is attached, in which sleeve an arm (8, 8') respectively, of the labial arch is mounted, wherein the arm (8, 8') is terminated by a locking element (9, 9') respectively, and between the sleeve (11, 11') and the locking element (9, 9') tensioning means (10, 10') are provided on the arms (8, 8').

4. The appliance according to claim 3, wherein the tensioning means is an orthodontic spring.

5. The appliance according to claims 1-4, wherein the appliance additionally comprises a pushing arch having a pressing block (12) and two arms (13, 13') equipped with pushing means (15, 15').

6. The appliance according to claim 5, wherein the arms of the pushing arch (13, 13') are mounted in the sleeves (14, 14') formed in the mounting elements (4, 4') respectively, and pushing means (15, 15') are provided on the arms (10, 10') between the sleeve (14, 14') and the pressing block.

7. The appliance according to claims 5 or 6, wherein the pushing means is an orthodontic spring.

8. The appliance according to claims 5-7, wherein the pressing block (12) reproduces the shape of the posterior part of the patient's anterior teeth located in the target positions as envisaged by the treatment plan.

9. The appliance according to claims 1-8, wherein the correcting plate (7) and/or the mounting elements (4, 4') and/or the connector (5) and/or the pressing block (12) are constituted by a thermoformable plate made of thermoplastic material.

10. The appliance according to claims 1-8, wherein the correcting plate (7) and/or the mounting elements (4, 4') and/or the connector (5) and/or the pressing block (12) are arranged as 3D prints.

11. The appliance according to claims 1-10, wherein the base connector (5) comprises a reinforcing arch (6).

12. The appliance according to claims 1-10, wherein the connector (5) is arranged as an adjustable connector, which ensures adjustment of the distance between the mounting elements.

13. The appliance according to claims 1-12, wherein the tensioning means (10, 10') is placed in the protective sleeve (19) provided on the surface of the mounting element (4, 4').

14. The appliance according to claims 1-13, wherein the correcting plate (7) and/or the mounting elements (4, 4') and/or the connector (5) and/or the pressing block (12) and/or the protective sleeve (19), more preferably all of said elements, are made of a transparent material.

## Patentansprüche

1. Ein Gerät für kieferorthopädische Korrektur der Einstellung von einem Frontzahn bzw. mehreren Frontzähnen im Kiefer bzw. Unterkiefer des Patienten. bestehend aus:
einem labialen Bogen (3) mit einer Korrekturplatte (7) und zwei Armen (8, 8'), ausgestattet mit Spanneinrichtungen (10, 10'); und
einer Basis (1), bestehend aus zwei entgegengesetzten Befestigungselementen (4, 4'), die über ein Verbindungsteil (5) verbunden und zur Befestigung des Geräts auf den Zähnen auf beiden Seiten des Kiefers bzw. Unterkiefers des Patienten vorgesehen sind, wobei die Arme (8, 8') des labialen Bogens (3) in den Befestigungselementen (4, 4') der Basis (1) montiert sind.
**dadurch gekennzeichnet dass** jedes der Befestigungselemente (4, 4') in Form einer Platte ausgestaltet ist, die die Form von mindestens zwei aufeinander folgenden prämolaren Zähnen des Patienten, vorzugsweise zwei aufeinander folgenden prämolaren Zähnen und einem weiter folgenden Backenzahn reproduziert, wobei die Befestigungselemente (4,4') so angeordnet sind, dass die Befestigungselemente (4, 4') nach der Platzierung im Kiefer oder Unterkiefer des Patienten die oberen und seitlichen Oberflächen der Zahnkronen des Patienten umfassen.

2. Das Gerät nach Anspruch 1, wobei die Korrekturplatte (7) die Form des vorderen Teils der im Verhältnis zueinander stehenden Vorderzähne des Patienten in den im Rahmen der kieferorthopädischen Korrektur vorgesehenen Zielpositionen reproduziert, die Korrekturplatte ist so angeordnet, dass nach der Platzierung im Kiefer oder Unterkiefer des Patienten die Korrekturplatte im Wesentlichen die gesamte Oberfläche der Kronen des vorderen Teils der Vorderzähnc umfasst,

3. Das Gerät nach Ansprüchen 1 oder 2, wobei zu jedem der Befestigungselemente (4,4') jeweils eine Hülse (11, 11') befestigt ist, in der Hülse jeweils ein Arm (8, 8') des labialen Bogens montiert ist, wobei der Arm (8, 8') durch jeweils ein Sperrelement (9, 9') beendet ist. und zwischen der Hülse (11, 11') und dem Sperrelement (9, 9') die Spanneinrichtungen (10, 10') an den Armen (8, 8') vorgesehen sind.

4. Das Gerät nach Anspruch 3, wobei die Spanneinrichtung als eine kieferorthopädische Feder ausgestaltet ist.

5. Das Gerät nach Ansprüchen 1-4, wobei das Gerät zusätzlich einen Schiebebogen mit einem Druckblock (12) und zwei Armen (13, 13'), die mit den Schiebeeinrichtungen (15, 15') ausgestattet sind, umfasst.

6. Das Gerät nach Anspruch 5, wobei die Arme des Schicbebogens (13, 13') in den Hülsen (14, 14'), die als Befestigungselemente (4, 4') ausgestaltet sind, montiert sind und die Schiebeeinrichtungen (15, 15') an den Armen (10, 10') zwischen der Hülse (14 14') und dem Druckblock vorvorgesehen sind.

7. Das Gerät nach Ansprüchen 5 oder 6, wobei die Schiebeeinrichtung als eine kieferorthopädische Feder ausgestaltet ist.

8. Das Gerät nach Ansprüchen 5-7, wobei der Druckblock (12) die Form des hinteren Teils der Vorderzähne des Patienten in den im Behandlungsplan vorgesehenen Zielpositionen reproduziert.

9. Das Gerät nach Ansprüchen [-8, wobei die Korrekturplatte (7) und/oder die ßefestigungselemente (4, 4') und/oder das Verbindungsteil (5) und/oder der Druckblock (12) aus einer thermoformbare Platte aus thermoplastischem Material gebildet sind.

10. Das Gerät nach Ansprüchen 1-8, wobei die Korrekturplatte (7) und/oder die ßefestigungselemente (4, 4') und/oder das Verbindungsteil (5) und/oder der Druckblock (12) als 3D-Drucke ausgestaltet sind.

11. Das Gerät nach den Ansprüchen 1-10, wobei das Basis-Verbindungsteil (5) einen verstärkenden Bogen (6) aufweist.

12. Das Gerät nach Ansprüchen 1-10, wobei das Verbindungsteil (5) als ein einstellbares Verbindungsteil ausgestaltet ist, das die Einstellung des Abstandes zwischen den Befestigungselementen sicherstellt.

13. Das Gerät nach Ansprüchen 1-12, wobei die Spanneinrichtungen (10, 10') in den Schutzhülsen (19) platziert sind, die auf der Oberfläche des Befestigungselements (4, 4') angeordnet sind.

14. Das Gerät nach Ansprüchen 1-13, wobei die Korrekturplatte (7) und/oder die Befestigungselemente (4, 4') und/oder das Verbindungsteil (5) und/oder der Druckblock (12) und/oder die Schutzhülse (19), vorzugsweise alle genannten Elemente, aus einem transparenten Material bestehen.

## Revendications

1. Un appareil pour la correction orthodontique de positon d'une ou de plusieurs dents antérieures dans la mâchoire ou la mandibule du patient, l'appareil comprenant :
un arc labial (3) comportant une plaque de correction (7) et deux bras (8, 8') équipés de moyens de tension (10, 10') ; et
une base (1) constituée de deux éléments de montage opposés (4, 4') reliés par un connecteur (5) et prévus pour fixer l'appareil sur les dents des deux côtés de la mâchoire ou de la mandibule du patient, où les bras (8, 8') de l'arc labial (3) sont montés dans les éléments de montage (4, 4') de la base (1),
**caractérisé en ce que** chacun des éléments de montage (4, 4') se présente sous forme d'une plaque reproduisant la forme d'au moins deux dents prémolaires consécutives du patient, de préférence deux dents prémolaires et une dent molaire suivante, le plus préférablement deux dents prémolaires et deux dents molaires suivantes, et où les éléments de montage (4, 4') sont agencés de telle sorte que, lorsqu'ils sont placés sur la mâchoire ou la mandibule du patient, les éléments de montage (4, 4') recouvrent les surfaces supérieure et latérale des couronnes de dents du patient.

2. L'appareil selon la revendication 1, où la plaque de correction (7) reproduit la forme de la partie antérieure des dents antérieures du patient situées les unes par rapport aux autres dans les positions cibles envisagées par correction orthodontique ; la plaque de correction est agencée de telle sorte que, lorsqu'elle est placée sur la mâchoire ou la mandibule du patient, la plaque de correction recouvre essentiellement toute la surface des couronnes de la partie antérieure des dents antérieures.

3. L'appareil selon les revendications 1 ou 2, où un manchon (11, 11') est fixé à chacun des éléments de montage (4, 4') respectivement, dans lequel manchon un bras (8, 8') du l'arc labial est monté respectivement, où le bras (8, 8') est terminé par un élément de blocage (9, 9') respectivement et entre le manchon (11, 11') et l'élément de blocage (9, 9'), des moyens de tension (10, 10') sont prévus sur les bras (8, 8').

4. L'appareil selon la revendication 3, où les moyens de tension sont constitués par un ressort orthodontique.

5. L'appareil selon les revendications 1 à 4, où l'appareil comprend en outre un arc de poussée comportant un bloc presseur (12) et deux bras (13, 13') équipés de moyens de poussée (15, 15').

6. L'appareil selon la revendication 5, où les bras de l'arc de poussée (13, 13') sont montés dans les manchons (14, 14') formés dans les éléments de montage (4, 4') respectivement et les moyens de poussée (15, 15') sont prévus sur les bras (10, 10') entre le manchon (14, 14') et le bloc presseur.

7. L'appareil selon les revendications 5 ou 6, où les moyens de poussée sont constitués par un ressort orthodontique.

8. L'appareil selon les revendications 5 à 7, où le bloc presseur (12) reproduit la forme de la partie postérieure des dents antérieures du patient situées dans les positions cibles comme prévu par le plan de traitement.

9. L'appareil selon les revendications 1 à 8, où la plaque de correction (7) et/ou les éléments de montage (4, 4') et/ou le connecteur (5) et/ou le bloc presseur (12) sont constitués par une plaque thermoformable réalisée en un matériau thermoplastique.

10. L'appareil selon les revendications 1 à 8, où la plaque de correction (7) et/ou les éléments de montage (4, 4') et/ou le connecteur (5) et/ou le bloc presseur (12) sont agencés sous forme d'impressions 3D.

11. L'appareil selon les revendications 1 à 10, où le connecteur de base (5) comprend un arc de renforcement (6).

12. L'appareil selon les revendications 1 à 10, où le connecteur (5) est agencé sous forme d'un connecteur réglable qui assure le réglage de la distance entre les éléments de montage.

13. L'appareil selon les revendications 1 à 12, où les moyens de tension (10, 10') sont placés dans le manchon protecteur (19) prévu sur la surface de l'élément de montage (4. 4').

14. L'appareil selon les revendications 1 à 13, où la plaque de correction (7) et/ou les éléments de montage (4, 4') et/ou le connecteur (5) et/ou le bloc presseur (12) et/ou le manchon protecteur (19), plus préférablement tous ces éléments, sont réalisés en un matériau transparent.
